# EUROPEAN PATENT SPECIFICATION

(11) **EP 1 450 599 B1**
(45) Date of publication and mention of the grant of the patent: **04.10.2006**
(21) Application number: 02783068.6
(22) Date of filing: 04.11.2002
(51) Int. Cl.: A01K 1/01

(54) **CAT LAVATORY**
KATZENKLO
TOILETTES POUR CHAT

(30) Priority: 05.11.2001 DE 10154256; 13.12.2001 DE 10161359; 27.05.2002 DE 10223476
(43) Date of publication of application: 01.09.2004
(73) Proprietor: Mars Inc., McLean, VA 22101 (US)
(72) Inventor: LANGE, Dietmar, 56179 Vallendar (DE); ZOLLER, Wolfram, 27208 Kirchlintelns- Hohenaverbergen (DE); HOMMOLA, Jürgen, 32425 Minden (DE)
(74) Representative: Winkler, Andreas Fritz Ernst
(86) International application number: PCT/EP2002/012269
(87) International publication number: WO 2003/039246

(56) References cited:
- DE-U- 9 207 275
- FR-A- 2 454 263
- FR-A- 2 645 401
- GB-A- 2 247 818
- US-A- 4 716 853
- US-A- 5 251 573

## Description

The invention relates to a cat lavatory according to the preamble of claim 1.

Conventional cat lavatories usually consist of a trough-like container part which is typically filled with absorbent material, especially cat litter. In some cases, it is possible to place on this lower part an upper part constituting a circumferential rim in order to prevent cat litter from being removed from the cat lavatory when the animal scratches.

Some or all of the absorbent material must be removed from the lower part at regular intervals and replaced with new material. Furthermore, for reasons of hygiene, it is necessary to empty the lower part completely at regular intervals and to clean it thoroughly to remove remnants of excrement and urine. This process is not only unpleasant and burdensome, but also means that, in the course of time, the lower part becomes scratched and more susceptible to particles adhering, so that it has to be replaced completely after a certain time.

Cat lavatories are known from the state of the art in which a bag filled with cat litter is placed in the lower part, it being possible to seal the bag after use and dispose of it in its entirety.

DE 36 22 528 C2, for example, discloses a cat lavatory consisting of a disposable soft package made of flexible material with a container space closed on all sides and holding a batch of hygienic litter. For the package to be used, the top side of the container space can be undone and opened up. After use, the package containing the litter material can be disposed of in a sealed condition.

DE 35 39 637 A1 discloses a cat lavatory with a lower part and a replaceable bag filled with cat litter which can be placed in the lower part. The bag is designed in such a way that the end portions of the bag can be folded over the upper periphery of the lower part and secured (e.g. with the upper part) in such a way that it is possible to reduce the soiling of the lower part. After use, the bag can sealed by means of a closure and disposed of in its entirety.

US 3,771,493 discloses a cat lavatory comprising a container with a lining in the form of a polyethylene film, for example, which can be placed in the container. Cat litter is poured into the lining and is removed from the container together with the lining after use for disposal.

Even in these prior art cat lavatories, soiling of the lower part cannot be avoided in many cases, so that the lower part has to be cleaned and disinfected - albeit possibly at greater intervals. Furthermore, all known disposable inserts in cat lavatories call for the use of a relatively large amount of material, because they have to provide sufficient material to line the entire lower part and preferably even have to project above the upper rim of the lower part so that they can be secured there.

The published patent application DE-OS 27 37 617 discloses a dry lavatory, preferably for cats, with a plastic film in the form of a trough which is stuck or welded at the rear to a lid of packing paper that can be torn open to form a sealable bag and which, after use, is intended as a disposable lavatory.

DE-U-92 07 275 discloses a separate upper part for a cat lavatory forming a circumferential rim disposed in the (upper) region of the circumferential side wall of a container.

FR-A-2645401 discloses a cat lavatory according to the preamble of claim 1. In detail a cat lavatory consisting of a container with a circumferential side wall is disclosed which, in the state in which it is delivered to the consumer, contains at least one absorbent material, and which is closed on all sides and is designed in such a way that it is opened before use and is disposed off in its entirety after use, further encompassing a separate upper part forming a circumferential rim disposed in the region of the side wall of the container and providing an additional covering being designed such that the absorbent material contained in the container is essentially covered completely.

Further, US-A-4,716,853 discloses a disposable litter for cats or the like domestic animals, comprising a generally rectangular, open-top shallow container, said container comprising a flat bottom surrounded by lateral walls, a layer of absorbent material disposed at the bottom of the container, and a membrane of paper or plastic material secured directly onto the upper surface of the annular shoulder of the container all around the same, for holding the layer of absorbent material in position at the bottom of that container as long as desired, said membrane, once removed, giving access to said layer of absorbent material and transforming said layer of absorbent material and said container into which it is disposed into a litter that may be discarded once the layer of absorbent material is soiled.

The problem on which the invention is based is therefore to develop an alternative form of cat lavatory which manages completely without a lower part holding cat litter or a bag containing cat litter, but which at the same time offers the advantages of a conventional cat lavatory consisting of a lower part and an upper part placed on top, and which additionally prevents an easy falling out of absorbent material out of the contains and provides additional stability.

This problem is solved in accordance with the features of the characterizing part of claim 1.

It is preferably envisaged in this connection that the container should be substantially stable in shape.

Alternatively, the container can be stabilised in shape by the upper part.

The upper part preferably comprises a circumferential inner wall, a circumferential outer wall which is spaced apart from the inner wall, and a circumferential top side connecting the inner wall and the outer wall.

In this context, it is preferably envisaged that, after being placed on the container, the inner wall of the upper part is disposed inside the circumferential side wall of the container, while the outer wall is outside the latter.

In one embodiment, the container is connected to the upper part by securing means.

It is particularly preferable for the upper part to be designed with a lower height at least in one section than in the remaining area.

In addition, it is envisaged that the upper part should have at least one recessed grip in the region of the lower edge of the outer wall.

Apart from that, it is preferably envisaged that the upper part should be provided, on its lower side, with means for immobilising it on the standing surface.

It is preferable in this context for the container to be resealable.

Alternatively, a bag is provided together with the container, the bag being designed to hold the container after use for disposal.

Preferably, the bag is removably secured to the container.

It is still preferred that the bag is removably secured on a side of a lid-like closure or a film closure for the container, the side facing in the closed condition the inside of the container.

In an alternative, the bag is secured to the floor space of the container.

It is particularly preferably, that the bag essentially consists of paper, optionally lined on its inner side.

In one embodiment the bag is sealably designed.

In one embodiment, the covering is removably arranged at or in the container.

It is preferred, that the covering is arranged between the absorbent material and the lid-like closure and film closure for the container.

In a particularly preferred embodiment the covering essentially consists of paper board, optionally lined at least on the side facing to the absorbent material.

According to the invention, it is still perferably, that the circumferential side wall has on its inner side directly above the layer of absorbent material at least partially projections or a circumferential projection, being designed such that the inserted covering is supported thereon.

According to the invention, the container is made from a material selected from the group consisting of cardboard, coated board and/or plastic.

In a preferred embodiment, the container is made from cardboard which, at least in the region holding the absorbent material, is lined with material that is impermeable to moisture.

It is particularly preferable for the container to be made from recyclable material.

According to the invention, it is preferably envisaged that the absorbent material should comprise a moisture-absorbent lining of non-woven material and/or a cat litter material.

The cat lavatory of the invention consists first of all of a container which is stable in shape and is filled with absorbent material, and which is sealed in the state in which it is delivered to the customer. For use, it is merely necessary to remove the upper cover of the container in order to provide a fully functioning cat lavatory. If the cover consists at least partially of a lid which can be placed or slid back on, the container can also be resealed at any time, which ensures that even a used cat lavatory can be moved around without soiling. This can be important firstly if it is desired to move the cat lavatory to a different place or location and secondly in particular when move the cat lavatory to a different place or location and secondly in particular when it is necessary to dispose of the cat lavatory once a certain degree of soiling has been reached. The container can also be designed in such a way that it occupies a smaller area when it is being stored or transported than it does when in use, which is achieved by designing it to b folded once or more times.

As an alternative for the disposal of the container after use a bag may be provided together with the container, which bag may hold the container after use for disposal. In this case, it is therefore not necessary to reseal the container for disposal, rather the container with used cat litter may be easily put into the bag which is additionally supplied and which may be, preferably closed, disposed directly.

There are several possibilities for the provision of the bag together with the container. The bag may be, for example, contained in a common packing cover or is, preferably, removably secured to the closed container. However, the bag may also be loosely inserted between cat litter and a lid-like closure or a film closure of the closed container.

Preferably the bag is made of paper, which is optionally coated with plastic on its inner side. In one embodiment of the invention the bag may be designed sealably, for example by providing a pressure sensitive mass as is known from envelopes.

The container can be designed with a relatively low height, since only a relatively thin layer of litter is needed if the cat lavatory is disposed of regularly. Furthermore, the container for the cat lavatory of the invention can also be designed with far less material than is used in conventional bags which are intended for insertion in the lower parts of conventional cat lavatories, since no material needs to be provided to cover the side walls and the upper edge of the lower part of a conventional lavatory. The amount of material needed for the container of the cat lavatory of the invention can be limited to the shallow container holding the absorbent material and the sealing film and/or sealing lid. The height of the container can be further reduced by using, in addition to the litter material, an absorbent lining of non-woven material at the very bottom, which preferably consists of a highly absorbent material, so that, in this case, only a very thin layer of conventional litter material is required to cover the lining of non-woven material.

It is preferable for the container to be designed to be stackable for ease of storage and ease of transport.

An additional covering is provided, which is designed such, that the absorbent material contained within a container is essentially covered completely. The container need thus not to be filled completely with absorbent material, and therefore prevents an easy falling of the absorbent material out of the container. Such a covering also supports the stability of the container by inserting the covering. Especially, the covering is of advantage, if the container is resealed with a lid-like closure arid optionally stored in a vertical position, since it is ensured that the litter material is held in place and cannot slide about.

In cases where the container is used with a bag, the provision of a covering gives the opportunity to cover the used cat lavatory, and to prevent a falling out of absorbing material, when the container is inserted into the supplied bag for disposal. Additionally, the covering avoids an easy dirtying of the bag.

The cat lavatory of the invention is characterised by a separate upper part forming a circumferential rim and, thanks to a U-shaped profile for example, which overlaps the circumferential side wall of the opened container, as a result of which a fully functioning cat lavatory of the kind known from the prior art is provided.

Even though it is envisaged, in one embodiment, that the container to be used for the novel cat lavatory should be largely stable in shape, it is also possible to design the container with a flexible shape, which is stabilised in shape by being secured on the upper part. This can be achieved, for example, simply by mounting the upper part described above with the U-shaped profile, but may also include more extensive securing on the upper part, such as by sliding the container in rails provided on the upper part, or securing it on the upper part by securing means provided for that purpose, such as press studs, hooks and velcro fasteners. Further ways of securing the container to the upper part are conceivable and are available to the man of average skill in the art. They are thus equally encompassed by the scope of protection even if they are not explicitly mentioned in the present description.

The invention will now be described with reference to the drawing in order to illustrate the use of the cat lavatory of the invention.
Fig. 1 shows a perspective view of a container for the cat lavatory of the invention in the half-opened state;
Fig. 2 shows an opened container with the upper part mounted;
Fig. 3 shows a used container - after the upper part has been removed - in the half-closed state; and
Fig. 4 shows a resealed container with used litter material, which can be disposed of in this form.
Fig. 5 shows a perspective view of a container for the cat lavatory of the invention in an opened condition and with a covering provided; and
Fig. 6 shows a covered container for disposal in a bag.

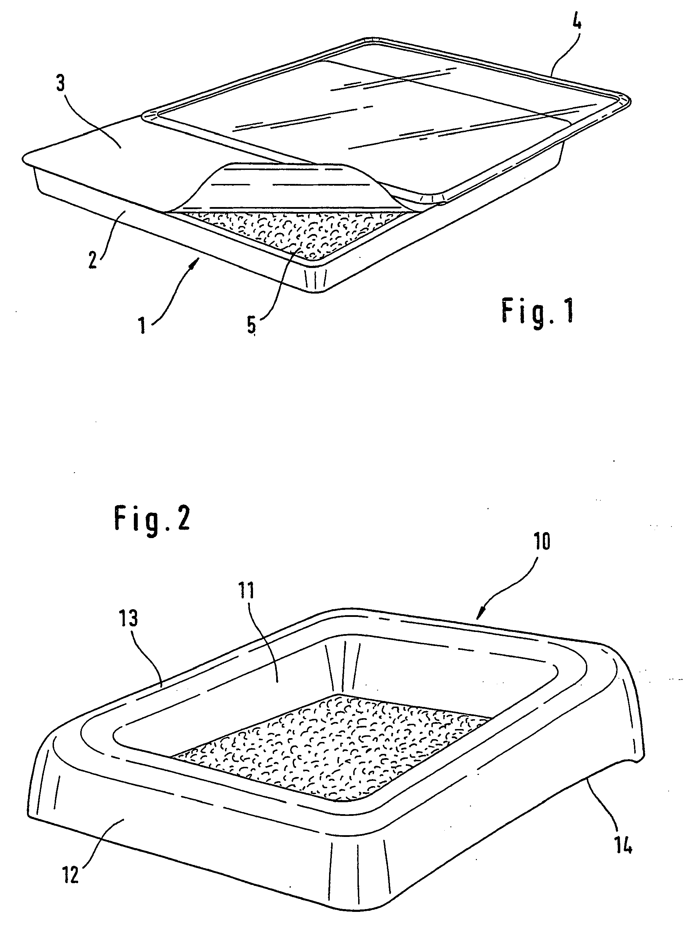

As shown in Fig. 1, the container 1 consists of a shallow trough with a circumferential side wall 2 for receiving an absorbent material 5, such as a lining of non-woven material and/or litter material for instance. In the state in which it is delivered to the consumer, the container 1 is sealed with a protective film 3 that can be torn off and a lid 4 which can be placed or slid on (as in the illustration of Fig. 1). In order to prepare the device for use, first of all the lid 4 is removed and then the protective film 3 is torn off.

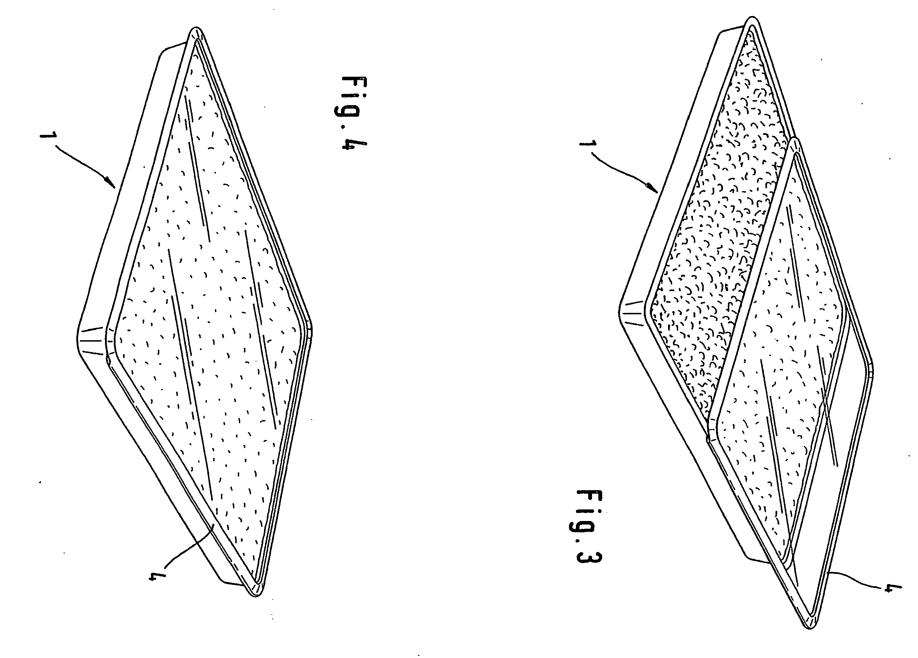

In the preferred embodiment of the invention, the upper part 10 is placed on top of the container 1 such that the inner wall 11 of the upper part 10 is inside the side wall 2 of the container 1, and the outer wall 12 of the upper part 10 is outside it (Fig. 2). In this way the, for example, U-shaped profile of the upper part 10 completely overlaps the edge portion of the container 1 and totally conceals it, so that an aesthetic overall impression is created. Furthermore, the inner wall 11 of the upper part 10 ensures that even the edge portion of the container 1 cannot be soiled during use, so that no surfaces contaminated with excrement and/or urine can come about on the container 1, which makes hygienic temporary storage and disposal of the used container possible. After a certain time in use, the upper part 10 is removed, the recessed grips 14 being helpful in this respect, and, as shown in Fig. 3, the container 1 is sealed again by placing or sliding the lid 4 back on. The container 1 sealed in this way can now be temporarily stored or disposed of, as shown in Fig. 4. The container 1 is preferably made from cardboard or board coated on the inside. The removable protective film 3 and lid 4 are preferably made of plastic, transparent plastic in the case of the lid, for example. The protective film 3 and/or lid 4 can be coated.

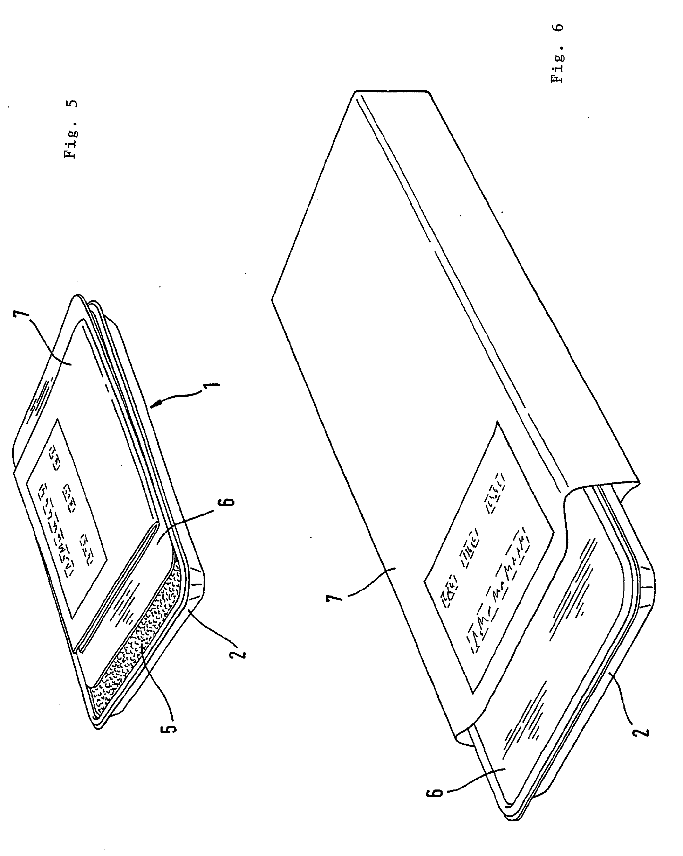

Figure 5 shows an opened container 1 made of a shallow trough with a circonferential side wall 2 for receiving an absorbent material 5. As may be seen, a covering 6 is provided on the absorbent material 5, onto which additionally a bag 7 is provided. The covering 6 may cover the absorbent material 5 completely and may be inserted into the container 1, such that the stability of the container may be improved. For use of the inventive cat lavatory the covering 6 and the bag 7 are removed and the container 1 may be used as described above.

After use of the container 1 it may be, as shown in Figure 6, covered with the covering 6 and may be directly inserted into the bag 7, which may then be disposed. As may be seen, the covering prevents a dirtying of the bag, providing an easy but also hygienic handling of the cat lavatory.

The novel cat lavatory system of the invention can advantageously manage completely without a separate lower part which has to be cleaned regularly. It is no longer necessary to pour in and remove litter, which is advantageous for reasons of hygiene and because less dust is created. Moreover, the cat lavatory system of the invention is particularly simple to handle and easy to store and dispose of. Since the container can be resealed, it is ensured that even a used cat lavatory can be moved around more easily. The container of the invention is less susceptible to damage than the plastic linings of the prior art and manages with less material, for the above-mentioned reasons.

As is apparent for someone skilled in the art, the concept of the cat lavatory as outlined above may, of course, be used for other kinds of pets.

## Claims

1. A cat lavatory consisting of a container (1) with a circumferential side wall (2) which, in the state in which it is delivered to the consumer, contains at least one absorbent material (3), and which is closed on all sides and is designed in such a way that it is opened before use and is disposed of in its entirety after use, wherein it encompasses a separate upper part (10) forming a circumferential rim disposed in the region of the side wall (2) of the container (1), and wherein the cat lavatory has an additional covering (6) being designed such, that the absorbent material (5) contained in the container (1) is essentially covered completely, **characterized in that** the container (1) in the state in which it is delivered to the consumer is sealed with a removable film (3) that can be torn off and a lid-like closure (4) which can be placed or slid on.

2. The cat lavatory as claimed in Claim 1, **characterised by** the fact that the container (1) is substantially inherently stable in shape.

3. The cat lavatory as claimed in Claim 1, **characterised by** the fact that the container (1) can be stabilised in shape by the upper part (10).

4. The cat lavatory as claimed in any of the preceding claims, **characterised by** the fact that the upper part (10) has a circumferential inner wall (11), a circumferential outer wall (12), which is spaced apart from said inner wall (11), and a top side (13) connecting said inner wall and said outer wall.

5. The cat lavatory as claimed in Claim 4, **characterised by** the fact that, after the upper part (10) is placed on top, the inner wall (11) of the upper part (10) is located inside the circumferential side wall (2) of said container (1), and the outer wall (12) is outside the latter.

6. The cat lavatory as claimed in any of the preceding claims, **characterised by** the fact that the container (1) is connected to the upper part (10) by securing means.

7. The cat lavatory as claimed in any of the preceding claims, **characterised by** the fact that the upper part (10) is designed with a lower height, at least in one section, than in the remaining area.

8. The cat lavatory as claimed in any of the preceding claims, **characterised by** the fact that the upper part (10) has at least one recessed grip (14) in the region of the lower edge of the outer wall (12).

9. The cat lavatory as claimed in any of the preceding claims, **characterised by** the fact that the upper part (10) is provided, on its lower side, with means for immobilising it on the standing surface.

10. The cat lavatory as claimed in any of the preceding claims, **characterised by** the fact that the container (1) is resealable.

11. The cat lavatory as claimed in any of the preceding claims 1 to 10 **characterized by** the fact that a bag is provided together with the container, the bag being designed to hold the container after use for disposal.

12. The cat lavatory as claimed in claim 11, **characterized by** the fact that the bag is removably secured to the container.

13. The cat lavatory as claimed in claim 12, **characterized by** the fact that the bag is removably secured on a side of a lid-like closure or a film closure for the container, the side facing in the closed condition the inside of the container.

14. The cat lavatory as claimed in claim 12, **characterized by** the fact that the bag is secured to the floor space of the container.

15. The cat lavatory as claimed in any of the preceding claims 11 to 14, **characterized by** the fact that the bag essentially consists of paper, optionally lined on its inner side.

16. The cat lavatory as claimed in any of the preceding claims 11 to 15, **characterized by** the fact that the bag is sealably designed.

17. The cat lavatory as claimed in any of the preceding claims, **characterized by** the fact that the covering (6) is removably arranged at or in the container (1).

18. The cat lavatory as claimed in claim 17, **characterized by** the fact that the covering (6) is arranged between the absorbent material (5) and the lid-like closure (4) and film closure for the container (1).

19. The cat lavatory as claimed in any of the preceding claims, **characterized by** the fact that the covering (6) essentially consists of paper board, optionally lined at least on the side facing the absorbent material (5).

20. The cat lavatory as claimed in any of the preceding claims, **characterized by** the fact that the circumferential side wall (2) has on its inner side directly above the layer of absorbent material (5) at least partially projections or a circumferential projection, being designed such that the inserted covering (6) is supported thereon.

21. The cat lavatory as claimed in any of the preceding claims, **characterised by** the fact that the container (1) is made from a material selected from the group consisting of cardboard, coated board and/or plastic.

22. The cat lavatory as claimed in Claim 21, **characterised by** the fact that the container (1) is made from cardboard which, at least in the region holding the absorbent material (5), is lined with material that is impermeable to moisture.

23. The cat lavatory as claimed in either of Claims 21 or 22, **characterised by** the fact that the container (1) is made from recyclable material.

24. The cat lavatory as claimed in any of the preceding claims, **characterised by** the fact that the absorbent material (5) comprises a moisture-absorbent lining of non-woven material and/or a cat litter material.

## Patentansprüche

1. Katzentoilette, bestehend aus einem Behältnis (1) mit einer umlaufenden Seitenwand (2), das im Anlieferungszustand beim Verbraucher mindestens ein absorptionsfähiges Material (3) enthält, und das allseitig verschlossen ist und so ausgelegt ist, daß es vor Gebrauch geöffnet und nach Gebrauch insgesamt entsorgt wird, wobei es ein getrenntes Oberteil (10), das einen umlaufenden Rand bildet, der im Bereich der Seitenwand (2) des Behältnisses (1) angeordnet ist, umfaßt, und wobei die Katzentoilette eine zusätzliche Abdeckung (6) aufweist, die so ausgelegt ist, daß das absorptionsfähige Material (5), das in dem Behältnis (1) enthalten ist, im wesentlichen vollständig abgedeckt ist, **dadurch gekennzeichnet, daß** das Behältnis (1) im Anlieferungszustand beim Verbraucher mit einer abiehbaren Folie (3), die abgezogen werden kann, und einem deckelartigen Verschluß (4), der aufgesetzt oder aufgeschoben werden kann, versiegelt ist.

2. Katzentoilette nach Anspruch 1, **dadurch gekennzeichnet, daß** das Behältnis (1) in seiner Form weitgehend in sich stabil ist.

3. Katzentoilette nach Anspruch 1, **dadurch gekennzeichnet, daß** das Behältnis (1) in seiner Form durch das Oberteil (10) stabilisierbar ist.

4. Katzentoilette nach einem der vorangehenden Ansprüche, **dadurch gekennzeichnet, daß** das Oberteil (10) eine umlaufende Innenwand (11), eine umlaufende Außenwand (12), die von der Innenwand (11) beabstandet ist, und eine die Innenwand und die Außenwand verbindende umlaufende Oberseite (13) umfaßt.

5. Katzentoilette nach Anspruch 4, **dadurch gekennzeichnet, daß** die Innenwand (11) des Oberteils (10) nach Aufsetzen des Oberteils (10) auf das Behältnis (1) innerhalb der umlaufenden Seitenwand (2) des Behältnisses (1) und die Außenwand (12) außerhalb derselben angeordnet ist.

6. Katzentoilette nach einem der vorangehenden Ansprüche, **dadurch gekennzeichnet, daß** das Behältnis (1) über Fixierungsmittel mit dem Oberteil (10) verbunden ist.

7. Katzentoilette nach einem der vorangehenden Ansprüche, **dadurch gekennzeichnet, daß** das Oberteil (10) zumindest in einen Teilbereich mit niedrigerer Höhe ausgebildet ist als im übrigen Bereich.

8. Katzentoilette nach einem der vorangehenden Ansprüche, **dadurch gekennzeichnet, daß** das Oberteil (10) im Bereich der Unterkante der Außenwand (12) wenigstens eine Griffmulde (14) aufweist.

9. Katzentoilette nach einem der vorangehenden Ansprüche, **dadurch gekennzeichnet, daß** das Oberteil (10) an seiner Unterseite mit Mitteln zum Fixieren auf der Standfläche versehen ist.

10. Katzentoilette nach einem der vorangehenden Ansprüche, **dadurch gekennzeichnet, daß** das Behältnis (1) wieder verschließbar ist.

11. Katzentoilette nach einem der vorangehenden Ansprüche 1 bis 10, **dadurch gekennzeichnet, daß** ein Beutel zusammen mit dem Behältnis bereitgestellt ist, wobei der Beutel ausgelegt ist, um das Behältnis nach Verwendung zur Entsorgung aufzunehmen.

12. Katzentoilette nach Anspruch 11, **dadurch gekennzeichnet, daß** der Beutel lösbar am Behältnis befestigt ist.

13. Katzentoilette nach Anspruch 12, **dadurch gekennzeichnet, daß** der Beutel lösbar an der im verschlossenen Zustand zum Inneren des Behältnisses zeigenden Seite eines Verschlußdeckels oder einer Verschlußfolie für das Behältnis befestigt ist.

14. Katzentoilette nach Anspruch 12, **dadurch gekennzeichnet, daß** der Beutel an der Standfläche des Behältnisses befestigt ist.

15. Katzentoilette nach einem der vorangehenden Ansprüche 11 bis 14, **dadurch gekennzeichnet, daß** der Beutel im wesentlichen aus Papier besteht, das optional auf der Innenseite beschichtet ist.

16. Katzentoilette nach einem der vorangehenden Ansprüche 11 bis 15, **dadurch gekennzeichnet, daß** der Beutel verschließbar ausgebildet ist.

17. Katzentoilette nach einem der vorangehenden Ansprüche, **dadurch gekennzeichnet, daß** die Abdeckung (6) entfernbar an oder in dem Behältnis (1) angeordnet ist.

18. Katzentoilette nach Anspruch 17, **dadurch gekennzeichnet, daß** die Abdeckung (6) zwischen dem absorptionsfähigen Material (5) und dem deckelartigen Verschluß (4) und Filmverschluß für das Behältnis (1) angeordnet ist.

19. Katzentoilette nach einem der vorangehenden Ansprüche, **dadurch gekennzeichnet, daß** die Abdeckung (6) im wesentlichen aus Pappe besteht, die ggf. zumindest auf der dem absorptionsfähigen Material (5) gegenüberliegenden Seite beschichtet ist.

20. Katzentoilette nach einem der vorangehenden Ansprüche, **dadurch gekennzeichnet, daß** die umlaufende Seitenwand (2) auf ihrer Innenseite unmittelbar oberhalb der Schicht aus absorptionsfähigem Material (5) zumindest partiell Vorsprünge oder einen umlaufenden Vorsprung aufweist, die bzw. der so ausgelegt sind bzw. ausgelegt ist, daß diese bzw. dieses die eingelegte Abdeckung stützen bzw. stützt.

21. Katzentoilette nach einem der vorangehenden Ansprüche, **dadurch gekennzeichnet, daß** das Behältnis (1) aus einem Material hergestellt ist, das ausgewählt ist aus der Gruppe bestehend aus Karton, beschichtetem Karton und/oder Kunststoff.

22. Katzentoilette nach Anspruch 21, **dadurch gekennzeichnet, daß** das Behältnis (1) aus Karton hergestellt ist, der zumindest in dem das absorptionsfähige Material (5) aufnehmenden Bereich mit feuchtigkeitsundurchlässigem Material beschichtet ist.

23. Katzentoilette nach Anspruch 21 oder 22, **dadurch gekennzeichnet, daß** das Behältnis (1) aus recyclefähigem Material hergestellt ist.

24. Katzentoilette nach einem der vorangehenden Ansprüche, **dadurch gekennzeichnet, daß** das absorptionsfähige Material (5) eine feuchtigkeitsabsorbierende Vlieseinlage und/oder ein Katzenstreumaterial umfaßt.

## Revendications

1. Toilettes pour chat consistant en un récipient (1) avec une paroi latérale circonférentielle (2) qui, dans l'état dans lequel elles sont livrées au consommateur, contient au moins un matériau absorbant (5) et qui sont fermées sur tous les côtés et sont conçues d'une manière telle qu'elles sont ouvertes avant l'utilisation et sont jetées totalement après utilisation, dans lesquelles elles comprennent une partie supérieure séparée (10) formant un rebord circonférentiel disposé dans la région de la paroi latérale (2) du récipient (1) et dans lesquelles les toilettes pour chat ont un couvercle supplémentaire (6) étant conçu de telle sorte que le matériau absorbant (5) contenu dans le récipient (1) est essentiellement recouvert complètement, **caractérisées en ce que** le récipient (1) dans l'état dans lequel il est livré au consommateur est fermé hermétiquement avec un film amovible (3) qui peut être déchiré et une fermeture en forme de recouvrement (4) qui peut être placée ou glissée en place.

2. Toilettes pour chat selon la revendication 1, **caractérisées par le fait que** le récipient (1) est sensiblement de forme inhérente stable.

3. Toilettes pour chat selon la revendication 1, **caractérisées par le fait que** le récipient (1) peut être stabilisé en forme par la partie supérieure (10).

4. Toilettes pour chat selon l'une quelconque des revendications précédentes, **caractérisées par le fait que** la partie supérieure (10) comporte une paroi interne circonférentielle (11), une paroi externe circonférentielle (12), qui est espacée de ladite paroi interne (11) et un côté supérieur (13) connectant ladite paroi interne et ladite paroi externe.

5. Toilettes pour chat selon la revendication 4, **caractérisées par le fait que**, une fois que la partie supérieure (10) est placée sur le dessus, la paroi interne (11) de la partie supérieure (10) est située à l'intérieur de la paroi latérale circonférentielle (2) dudit récipient (1) et la paroi externe (12) est à l'extérieur de ce dernier.

6. Toilettes pour chat selon l'une quelconque des revendications précédentes, **caractérisées par le fait que** le récipient (1) est connecté à la partie supérieure (10) par un moyen de fixation.

7. Toilettes pour chat selon l'une quelconque des revendications précédentes, **caractérisées par le fait que** la partie supérieure (10) est conçue avec une hauteur inférieure, au moins dans une section, par rapport à la zone restante.

8. Toilettes pour chat selon l'une quelconque des revendications précédentes, **caractérisées par le fait que** la partie supérieure (10) comporte au moins une poignée évidée (14) dans la région du bord inférieur de la paroi externe (12).

9. Toilettes pour chat selon l'une quelconque des revendications précédentes, **caractérisées par le fait que** la partie supérieure (10) est prévue, sur son côté inférieur, de moyens pour l'immobiliser sur la surface droite.

10. Toilettes pour chat selon l'une quelconque des revendications précédentes, **caractérisées par le fait que** le récipient (1) peut être refermé.

11. Toilettes pour chat selon l'une quelconque des revendications précédentes 1 à 10, **caractérisées par le fait qu'**un sac est prévu conjointement avec le récipient, le sac étant conçu pour contenir le récipient après utilisation pour le jeter,

12. Toilettes pour chat selon la revendication 11, **caractérisées par le fait que** le sac est fixé de manière amovible au récipient.

13. Toilettes pour chat selon la revendication 12, **caractérisées par le fait que** le sac est fixé de manière amovible sur un côté d'une fermeture en forme de recouvrement ou d'une fermeture pelliculaire pour le récipient, le côté faisant face dans la condition fermée à l'intérieur du récipient.

14. Toilettes pour chat selon la revendication 12, **caractérisées par le fait que** le sac est fixé à l'espace de sol du récipient.

15. Toilettes pour chat selon l'une quelconque des revendications 11 à 14, **caractérisées par le fait que** le sac consiste essentiellement en papier, de manière optionnelle revêtu sur son côté interne.

16. Toilettes pour chat selon l'une quelconque des revendications précédentes 11 à 15, **caractérisées par le fait que** le sac est conçu de manière étanche.

17. Toilettes pour chat selon l'une quelconque des revendications précédentes, **caractérisées par le fait que** le couvercle (6) est agencé de manière amovible au niveau du récipient (1) ou dans celui-ci.

18. Toilettes pour chat selon la revendication 17, **caractérisées par le fait que** le couvercle (6) est agencé entre le matériau absorbant (5) et la fermeture en forme de recouvrement (4) et une fermeture pelliculaire pour le récipient (1).

19. Toilettes pour chat selon l'une quelconque des revendications précédentes, **caractérisées par le fait que** le couvercle (6) consiste essentiellement en carton, de manière optionnelle revêtu au moins sur le côté faisant face au matériau absorbant (5).

20. Toilettes pour chat selon l'une quelconque des revendications précédentes, **caractérisées par le fait que** la paroi latérale circonférentielle (2) comporte sur son côté interne directement au dessus de la couche de matériau absorbant (5) au moins partiellement des saillies ou une saillie circonférentielle, étant conçues de telle sorte que le couvercle inséré (6) est supporté sur elles.

21. Toilettes pour chat selon l'une quelconque des revendications précédentes, **caractérisées par le fait que** le récipient (1) est composé d'un matériau sélectionné parmi le groupe consistant en le carton, le carton couché et / ou le plastique.

22. Toilettes pour chat selon la revendication 21, **caractérisées par le fait que** le récipient (1) est composé d'un carton qui, au moins dans la région contenant le matériau absorbant (5), est revêtu avec un matériau qui est imperméable à l'humidité.

23. Toilettes pour chat selon l'une des revendications 21 ou 22, **caractérisées par le fait que** le récipient (1) est composé de matériau recyclable.

24. Toilettes pour chat selon l'une quelconque des revendications précédentes, **caractérisées par le fait que** le matériau absorbant (5) comprend un revêtement absorbant l'humidité de matériau non tissé et / ou un matériau de litière pour chat.
